# EUROPEAN PATENT APPLICATION

(11) **EP 4 629 061 A1**
(43) Date of publication of application: **08.10.2025**
(21) Application number: 23910061.3
(22) Date of filing: 11.12.2023
(51) Int. Cl.: G06F 8/65, G06F 9/455

(54) **SOFTWARE UPGRADING METHOD AND APPARATUS**

(30) Priority: 30.12.2022 CN 202211733367
(71) Applicant: Huawei Technologies Co., Ltd., Shenzhen, Guangdong 518129 (CN)
(72) Inventor: ZHENG, Chuan, Shenzhen, Guangdong 518129 (CN); YE, Zhenyu, Shenzhen, Guangdong 518129 (CN); XIE, Xiangyou, Shenzhen, Guangdong 518129 (CN)
(74) Representative: Goddar, Heinz J.
(86) International application number: PCT/CN2023/137753
(87) International publication number: WO 2024/140131

(57) **Abstract**

This application provides a software upgrade method and apparatus. The method includes: obtaining to-be-upgraded software of a host machine; obtaining a first hardware resource and a first software resource that need to be used by a first virtual machine to execute a first task; decoupling the first hardware resource and the first software resource from the host machine before the to-be-upgraded software of the host machine is upgraded; and executing the first task by using the first virtual machine during upgrade of the to-be-upgraded software of the host machine, where the first task is executed based on the first hardware resource and the first software resource that are decoupled from the host machine. According to the method, during upgrade of software of the host machine, a task item that is being executed by a virtual machine on the host machine is not suspended. This significantly improves performance of the host machine, and also speeds up execution of the task item by the virtual machine.

## Description

This application claims priority to Chinese Patent Application No. 202211733367.5, filed with the China National Intellectual Property Administration on December 30, 2022, and entitled "SOFTWARE UPGRADE METHOD AND APPARATUS", which is incorporated herein by reference in its entirety.

### TECHNICAL FIELD

This application relates to the field of operating system technologies, and in particular, to a software upgrade method and apparatus.

### BACKGROUND

To improve capabilities of a host machine, a plurality of virtual machines may be run on the host machine to provide services for users. The host machine runs an operating system of the host machine and some functional components required for running the virtual machines, such as a QEMU component, a KVM component, and an OpenStack component. To add characteristics or fix vulnerabilities, it is often necessary to upgrade the operating system of the host machine.

During upgrade of the operating system, both hardware and software of the host machine need to be stopped. In this case, services running on the virtual machines need to be suspended. After a new operating system is completely loaded on the host machine, the hardware and the software of the host machine start to be initialized. The services running on the virtual machines resume running, only when the hardware and the software of the host machine are completely initialized. If the upgrade of the operating system of the host machine takes a long time, the services running on the virtual machines also wait for a long time. This affects performance of the virtual machines.

### SUMMARY

This application provides a software upgrade method. During upgrade of software of a host machine, a task item that is being executed by a virtual machine on the host machine is not suspended. This significantly improves performance of the host machine, and also speeds up execution of the task item by the virtual machine.

According to a first aspect, this application provides a software upgrade method. The method is applied to a host machine, and a first virtual machine is installed on the host machine. The method includes: obtaining to-be-upgraded software of the host machine; obtaining a first hardware resource and a first software resource that need to be used by the first virtual machine to execute a first task; decoupling the first hardware resource and the first software resource from the host machine before the to-be-upgraded software of the host machine is upgraded; and executing the first task by using the first virtual machine during upgrade of the to-be-upgraded software of the host machine, where the first task is executed based on the first hardware resource and the first software resource that are decoupled from the host machine.

After a virtual machine is installed on the host machine, the host machine allocates a hardware resource and a software resource to the virtual machine. In this case, before an operating system is upgraded, the host machine obtains the hardware resource and the software resource that are allocated to the virtual machine. Therefore, when the host machine upgrades the to-be-upgraded software, the host machine may decouple the hardware resource and the software resource that need to be used by the virtual machine from the host machine.

Decoupling means that a dependency relationship is removed, allowing the host machine to consider that the hardware resource and the software resource that are decoupled from the host machine are in a power-off state. In this case, when the host machine is restarted, the hardware resource and the software resource that are decoupled from the host machine are not restarted.

According to the method, during upgrade of software of the host machine, a task item that is being executed by the virtual machine on the host machine is not suspended. This significantly improves performance of the host machine, and also speeds up execution of the task item by the virtual machine.

With reference to the first aspect, in a possible implementation, decoupling the first hardware resource and the first software resource from the host machine specifically includes: removing a dependency relationship between the first hardware resource and the host machine and a dependency relationship between the first software resource and the host machine, so that the host machine cannot use the first hardware resource and the first software resource. In this way, when the host machine upgrades the to-be-upgraded software, the operating system of the host machine is shut down, restarted, and initialized, but the hardware resource and the software resource that are decoupled from the host machine are not stopped, restarted, or initialized.

With reference to the first aspect, in a possible implementation, a memory of the host machine includes a first memory area and a second memory area, and the first software resource is the first memory area.

The first memory area may also be referred to as a first random access memory area. The second memory area may also be referred to as a second random access memory area. A random access memory may be an area in which data is temporarily stored on the host machine. After the host machine is shut down and restarted, data stored in the random access memory on the host machine is cleared.

In this way, only the part that is of the memory and that is used by the virtual machine needs to be decoupled from the host machine. The second memory area maintains a coupling relationship with the host machine, to ensure normal execution of upgrading software of the host machine.

With reference to the first aspect, in a possible implementation, the first hardware resource includes one or more of the following: a first CPU, a first GPU, a first DPU, a first network interface card, and a first disk.

With reference to the first aspect, in a possible implementation, the method further includes: after the to-be-upgraded software of the host machine is completely upgraded, continuing to decouple the first hardware resource and the first software resource from the host machine. In this way, when the to-be-upgraded software of the host machine is upgraded next time, the operation of decoupling the first hardware resource and the first software resource from the host machine does not need to be performed again. This may improve efficiency of upgrading the host machine.

With reference to the first aspect, in a possible implementation, the to-be-upgraded software includes an operating system or one or more functional components in an operating system.

With reference to the first aspect, in a possible implementation, the method includes: upgrading the to-be-upgraded software by using a second software resource and a second hardware resource that are coupled to the host machine, where the second software resource is the second memory area, and the second hardware resource includes one or more of the following: a second CPU, a second GPU, a second DPU, a second network interface card, and a second disk.

According to a second aspect, this application provides a software upgrade apparatus. The apparatus includes a memory allocator, a decoupling partition manager, and an executor. The executor is configured to obtain to-be-upgraded software of a host machine. The memory allocator is configured to obtain a first software resource that needs to be used by a first virtual machine to execute a first task. The decoupling partition manager is configured to obtain a first hardware resource that needs to be used by the first virtual machine to execute the first task. The memory allocator is further configured to decouple the first software resource from the host machine before the to-be-upgraded software of the host machine is upgraded. The decoupling partition manager is further configured to decouple the first hardware resource from the host machine before the to-be-upgraded software of the host machine is upgraded. The executor is configured to execute the first task by using the first virtual machine during upgrade of the to-be-upgraded software of the host machine, where the first task is executed based on the first hardware resource and the first software resource that are decoupled from the host machine.

With reference to the second aspect, in a possible implementation, the memory allocator is specifically configured to remove a dependency relationship between the first software resource and the host machine, so that the host machine cannot use the first software resource; and the decoupling partition manager is specifically configured to remove a dependency relationship between the first hardware resource and the host machine, so that the host machine cannot use the first hardware resource.

With reference to the second aspect, in a possible implementation, a memory of the host machine includes a first memory area and a second memory area, and the first software resource is the first memory area.

With reference to the second aspect, in a possible implementation, the first hardware resource includes one or more of the following: a first CPU, a first GPU, a first DPU, a first network interface card, and a first disk.

With reference to the second aspect, in a possible implementation, the memory allocator is further configured to: after the to-be-upgraded software of the host machine is completely upgraded, continue to decouple the first software resource from the host machine; and the decoupling partition manager is further configured to: after the to-be-upgraded software of the host machine is completely upgraded, continue to decouple the first hardware resource from the host machine.

With reference to the second aspect, in a possible implementation, the to-be-upgraded software includes an operating system or one or more components in an operating system.

With reference to the second aspect, in a possible implementation, the executor is specifically configured to upgrade the to-be-upgraded software by using a second software resource and a second hardware resource that are coupled to the host machine, where the second software resource is the second memory area, and the second hardware resource includes one or more of the following: a second CPU, a second GPU, a second DPU, a second network interface card, and a second disk.

According to a third aspect, this application provides a software upgrade apparatus. The apparatus includes a processor and a memory. The memory is coupled to the processor. The memory is configured to store computer program code, and the computer program code includes computer instructions. The processor invokes the computer instructions, to enable a host machine to perform the software upgrade method according to any possible implementation of any one of the foregoing aspects.

According to a fourth aspect, this application provides a computer-readable storage medium, configured to store computer instructions. When the computer instructions are run on a computer, the computer is enabled to perform the software upgrade method according to any possible implementation of any one of the foregoing aspects.

According to a fifth aspect, this application provides a computer program product. When the computer program product is run on a computer, the computer is enabled to perform the software upgrade method according to any possible implementation of any one of the foregoing aspects.

For beneficial effects of the second aspect to the fifth aspect, refer to the descriptions of the beneficial effects in the first aspect. Details are not described herein again in this application.

### BRIEF DESCRIPTION OF DRAWINGS

FIG. 1 is a diagram of invoking a required resource when a virtual machine runs according to an embodiment of this application;
FIG. 2A is a diagram of decoupling a first random access memory area from a host machine according to an embodiment of this application;
FIG. 2B is a diagram of decoupling a first CPU, a first network interface card, and a first disk from a host machine according to an embodiment of this application;
FIG. 3 is a diagram of allocating, by a VPMEM allocator, a random access memory to a virtual machine on a host machine according to an embodiment of this application;
FIG. 4 is a diagram of allocating, by a Capsule partition manager, a hardware resource and a software resource to a virtual machine on a host machine according to an embodiment of this application;
FIG. 5 is a schematic flowchart of a software upgrade method according to an embodiment of this application;
FIG. 6 is a diagram of a software upgrade method in a DPU scenario according to an embodiment of this application;
FIG. 7 is a schematic flowchart of a software upgrade method according to an embodiment of this application;
FIG. 8 is a diagram of a software upgrade apparatus according to an embodiment of this application; and
FIG. 9 is a diagram of another software upgrade apparatus according to an embodiment of this application.

### DESCRIPTION OF EMBODIMENTS

The following clearly describes the technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

An operating system of a host machine may be classified based on operation permission. The operating system may be divided into a user mode and a kernel mode. The user mode includes applications installed on the host machine and processes running on the host machine. Compared with the kernel mode, the user mode has low execution permission. In the user mode, many operations are not permitted by the operating system. The kernel mode has high execution permission. For example, operations such as memory cleanup and interrupt handling need to be performed in the kernel mode. The kernel mode is equivalent to a layer between hardware and the user mode. In the user mode, access to peripheral devices, for example, a memory, a network interface card, and a disk, is not permitted. When the operating system needs to access a peripheral device in the user mode, the operating system needs to be switched from the user mode to the kernel mode, and the operating system may access the peripheral device in the kernel mode.

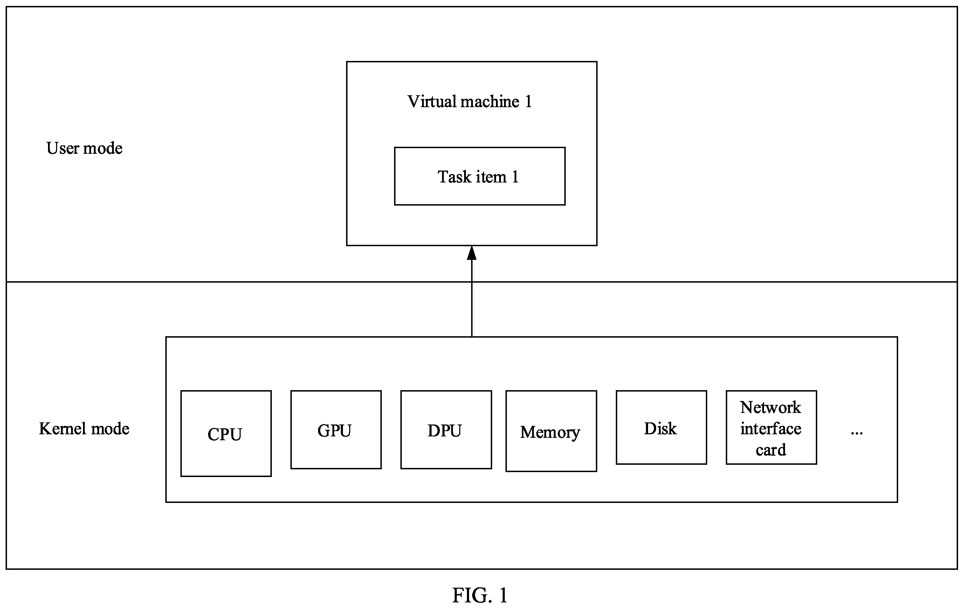

FIG. 1 is a diagram of invoking a required resource when a virtual machine runs.

The virtual machine needs to use a system resource when running. The system resource includes but is not limited to one or more of the following: a central processing unit (central processing unit, CPU), a graphics processing unit (graphics processing unit, GPU), a data processing unit (data processing unit, DPU), a disk, a network interface card, a memory, and the like.

To improve capabilities of a host machine and isolate different task items on the host machine, virtual machines may be installed on the host machine. The different task items are executed on different virtual machines, to isolate the task items and improve security.

As shown in FIG. 1, a virtual machine 1 is installed on the host machine. The virtual machine 1 runs in a user mode, and a task item 1 is executed on the virtual machine 1.

When executing a task item, the virtual machine 1 needs to use one or more of a CPU, a DPU, a GPU, a disk, a network interface card, a memory, and the like. When accessing the CPU, the DPU, the GPU, the disk, the network interface card, and the memory, the virtual machine 1 needs to be switched to a kernel mode, so that the virtual machine 1 can use the disk, the network interface card, and the memory.

To add characteristics of an operating system of the host machine or fix vulnerabilities of the operating system of the host machine, it is often necessary to upgrade the entire operating system or some functional components of the operating system of the host machine. During upgrade of the operating system of the host machine, both hardware and software of the host machine need to be stopped. After the operating system of the host machine is upgraded, the hardware and the software of the host machine need to be restarted. Then, the hardware and the software of the host machine start to work again.

In this case, during the upgrade of the operating system of the host machine, system resources on the host machine cannot be used. In other words, the virtual machine 1 cannot use the system resources on the host machine. In this case, during the upgrade of the operating system of the host machine, the virtual machine 1 suspends execution of the task item 1. After the operating system of the host machine is upgraded, the virtual machine 1 continues to execute the task item 1.

However, during the upgrade of the operating system of the host machine, if a virtual machine suspends execution of a task item, performance of the virtual machine is affected, and a processing speed of executing the task item by the virtual machine is also affected.

To enable the virtual machine not to suspend execution of the task item during the upgrade of the operating system of the host machine, the virtual machine may be migrated from the current host machine to an idle host machine before the operating system of the host machine is upgraded, so that the virtual machine executes the task item on the idle host machine. For example, the virtual machine 1 may be migrated from the to-be-upgraded host machine to another idle host machine, so that the virtual machine 1 may execute the task item 1 on the another idle host machine. After the operating system on the host machine is upgraded, the virtual machine is migrated back from the idle host machine to the upgraded host machine. For example, the virtual machine 1 may be migrated back from the another idle host machine to the upgraded host machine. The virtual machine 1 can continue to execute the task item 1 on the upgraded host machine.

However, in a process in which the virtual machine 1 is migrated out of the to-be-upgraded host machine and migrated to the another idle host machine, the virtual machine 1 needs to suspend a task item that is being processed. After the to-be-upgraded host machine is upgraded, in a process of migrating the virtual machine 1 back to the upgraded host machine, the virtual machine 1 also needs to suspend a task that is being processed.

That is, in a process of migrating out the virtual machine and a process of migrating back the virtual machine, a task item that is being processed needs to be suspended. In this period, performance of the virtual machine is also affected, and a processing speed of executing the task item by the virtual machine is affected.

To resolve the foregoing problem, this application provides a software upgrade method. The method includes the following steps.

Step 1: Before a host machine upgrades to-be-upgraded software, obtain a hardware resource and a software resource that need to be used when a virtual machine 1 executes a task item 1. The hardware resource that needs to be used by the virtual machine 1 includes but is not limited to one or more of the following: a first CPU, a first GPU, a first DPU, a first network interface card, a first disk, and the like. The software resource that needs to be used by the virtual machine 1 includes but is not limited to a random access memory. A random access memory may be an area in which data is temporarily stored on the host machine. After the host machine is shut down and restarted, data stored in the random access memory on the host machine is cleared.

Step 2: Decouple the hardware resource and software resource that need to be used by the virtual machine 1 from the host machine.

The host machine cannot access a hardware resource and a software resource that are decoupled from the host machine.

Optionally, in a process in which the host machine upgrades the to-be-upgraded software, the host machine may also need to use a hardware resource and the random access memory. Therefore, only the hardware resource and the software resource that need to be used when the virtual machine 1 executes the task item 1 need to be decoupled from the host machine. This ensures that the host machine can upgrade the to-be-upgraded software. In this case, a first random access memory area may be partitioned from the random access memory, and only the first random access memory area needs to be decoupled from the host machine. This allows the host machine to use another part of the random access memory area during the upgrade of the to-be-upgraded software.

Before the first random access memory area and the hardware resource are decoupled from the host machine, the first random access memory area and the hardware resource are coupled to both the host machine and the virtual machine 1. After the first random access memory area and the hardware resource are decoupled from the host machine, the first random access memory area and the hardware resource are still coupled to the virtual machine 1. In this case, the virtual machine 1 can access and use the first random access memory area and the hardware resource that are decoupled from the host machine.

Herein, decoupling may be understood as that the host machine removes a dependency relationship with the first random access memory area and the hardware resource, the host machine mistakenly considers that the first random access memory area and the hardware resource are in a power-off state, and the host machine does not use the first random access memory area and the hardware resource that are decoupled from the host machine.

Coupling is a state opposite to decoupling. The coupling may be understood as that the host machine or the virtual machine 1 has a binding relationship with the first random access memory area and the hardware resource, the host machine or the virtual machine 1 considers that the first random access memory area and the hardware resource are in a power-on state and a normal working state, and the host machine or the virtual machine 1 may use the first random access memory area and the hardware resource.

Step 3: In the process in which the host machine upgrades the to-be-upgraded software, the virtual machine 1 may execute the task item 1 based on the hardware resource and the software resource that are decoupled from the host machine.

Herein, the to-be-upgraded software may be upgrading an entire operating system of the host machine, or may be upgrading one or more functional components in an operating system on the host machine. Upgrading the entire operating system may refer to replacing an old operating system with a new operating system. Upgrading the one or more functional components in the operating system of the host machine may refer to replacing one or more old functional components in the operating system of the host machine with one or more new functional components.

Optionally, after the to-be-upgraded software of the host machine is upgraded, a decoupling relationship between the host machine and the hardware resource and the software resource that need to be used by the virtual machine 1 is still maintained. In this way, when the to-be-upgraded software of the host machine is upgraded next time, the operation of decoupling the hardware resource and the software resource that need to be used by the virtual machine 1 from the host machine does not need to be repeatedly performed. This helps improve an upgrade speed of the host machine.

In this way, during upgrade of the to-be-upgraded software of the host machine, a task item that is being executed by a virtual machine on the host machine is not suspended. This significantly improves performance of the host machine, and also speeds up execution of the task item by the virtual machine.

**First, a virtual machine 1 needs to use a software resource of a host machine, for example, a random access memory, during execution of a task item,** and the host machine also needs to use the random access memory during upgrade.

Before the host machine is upgraded, the random access memory on the host machine is coupled to both the host machine and the virtual machine. In this case, both the host machine and the virtual machine can use the random access memory on the host machine.

During the upgrade of the host machine, data in the random access memory on the host machine is cleared. However, the virtual machine needs to use the data in the random access memory to execute the task item. In this case, the task item executed by the virtual machine is interrupted.

To prevent the data in the random access memory from being cleared during the upgrade of the host machine and to allow the virtual machine to continue to execute the task item, the random access memory that needs to be used by the virtual machine needs to be decoupled from the host machine before the host machine is upgraded.

Optionally, when the virtual machine 1 is started up on the host machine, the software resource that needs to be used by the virtual 1 is already allocated to the virtual machine 1. For example, the software resource allocated to the virtual machine 1 may be a first random access memory area.

In this case, before the host machine is upgraded, a part of the random access memory may be partitioned from the random access memory of the host machine as the first random access memory area. The first random access memory area is used as a random access memory of the virtual machine 1, and the remaining another part of the random access memory area is used as a memory area of the host machine.

To enable the virtual machine to continue to execute the task item during the upgrade of the host machine, the first random access memory area needs to be decoupled from the host machine before the host machine is upgraded, so that the host machine cannot use the first random access memory area, while the virtual machine 1 can normally use the first random access memory area.

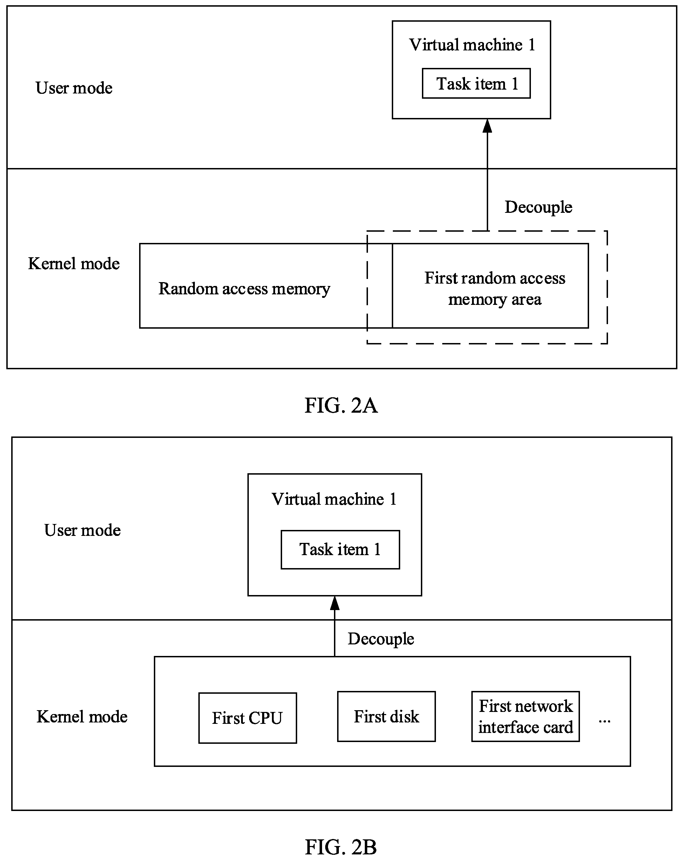

As shown in FIG. 2A, before the host machine is upgraded, a part, for example, the first random access memory area shown in FIG. 2A, is partitioned from running content of the host machine. The first random access memory area is decoupled from the host machine.

After the first random access memory area is decoupled from the host machine, in a process in which the host machine upgrades to-be-upgraded software, data in the first random access memory area is not cleared, the virtual machine 1 can access the first random access memory area and continue to use the data in the first random access memory area, while the host machine cannot access the first random access memory area and cannot use the data in the first random access memory area.

In addition to the virtual machine 1, another virtual machine installed on the host machine can also access the first random access memory area decoupled from the host machine.

In this way, in a process in which the host machine upgrades the to-be-upgraded software, data in another part that is of the random access memory and that is coupled to the host machine is discarded. The data reserved in the first random access memory area decoupled from the host machine is not lost, and the virtual machine can also access the first random access memory area. It is ensured that during the upgrade of the host machine, the virtual machine 1 can access the first random access memory area and use the data in the first random access memory area. In this way, the task item executed by the virtual machine 1 is not interrupted.

Second, the virtual machine 1 needs to use a hardware resource of the host machine, for example, a CPU, a GPU, a DPU, a network interface card, and a disk, during execution of the task item. The following embodiments of this application are described by using an example in which the virtual machine 1 needs to use a CPU, a network interface card, and a disk.

When upgrading the to-be-upgraded software, the host machine also needs to use a hardware resource, for example, a CPU, a network interface card, and a disk. In this case, before the to-be-upgraded software of the host machine is upgraded, the hardware resource that needs to be used by the virtual machine, for example, a first CPU, a first network interface card, and a first disk, may be obtained.

Before the host machine upgrades the to-be-upgraded software, the hardware resource on the host machine is coupled to the host machine and the virtual machine. In this case, both the host machine and the virtual machine can use the hardware resource on the host machine.

During the upgrade of the host machine, hardware resources on the host machine need to be powered off. In this case, the host machine cannot use the hardware resources that are powered off, and the task item executed by the virtual machine is interrupted.

To enable the virtual machine to continue to execute the task item in the process in which the host machine upgrades the to-be-upgraded software, the hardware resource that needs to be used by the virtual machine needs to be decoupled from the host machine before the host machine upgrades the to-be-upgraded software. For example, the first CPU, the first network interface card, and the first disk that need to be used by the virtual machine 1 need to be decoupled from the host machine.

As shown in FIG. 2B, before the host machine is upgraded, the first CPU, the first network interface card, and the first disk that need to be used by the virtual machine 1 are obtained, and the first CPU, the first network interface card, and the first disk are decoupled from the host machine.

Optionally, when the virtual machine 1 is started up on the host machine, the hardware resource that needs to be used by the virtual 1 is already allocated to the virtual machine 1. For example, the hardware resource allocated to the virtual machine 1 may be the first CPU, the first network interface card, and the first disk.

After the first CPU, the first network interface card, and the first disk are decoupled from the host machine, in the process in which the host machine upgrades the to-be-upgraded software, the first CPU, the first network interface card, and the first disk that are decoupled from the host machine are not powered off, and the host machine cannot use the first CPU, the first network interface card, and the first disk that are decoupled from the host machine, while the virtual machine 1 can use the first CPU, the first network interface card, and the first disk that are decoupled from the host machine.

Based on the foregoing analysis, an embodiment of this application provides a memory allocator and a decoupling partition manager.

In some embodiments, the memory allocator may also be referred to as a VPMEM allocator. The decoupling partition manager may also be referred to as a Capsule partition manager.

The VPMEM allocator is configured to: before to-be-upgraded software of a host machine is upgraded, allocate a random access memory to a virtual machine on the host machine, and decouple the random access memory allocated to the virtual machine from the host machine. The Capsule partition manager is configured to: before the to-be-upgraded software of the host machine is upgraded, allocate a hardware resource to the virtual machine on the host machine, and decouple the hardware resource allocated to the virtual machine from the host machine.

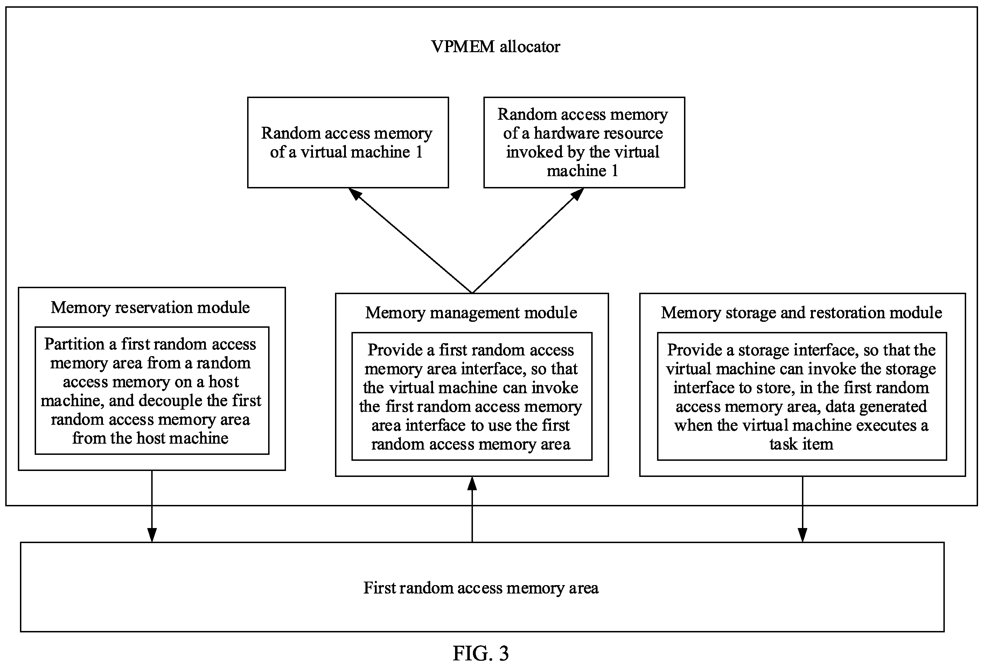

FIG. 3 is a diagram of allocating, by a VPMEM allocator, a random access memory to a virtual machine on a host machine.

Before the host machine starts to upgrade to-be-upgraded software of the host machine, the VPMEM allocator partitions a part from a random access memory of the host machine as a random access memory of the virtual machine, and another part of the random access memory area is used as the random access memory of the host machine. For example, the VPMEM allocator partitions a first random access memory area from the random access memory on the host machine. The first random access memory area is decoupled from the host machine, and the another part of the random access memory area is not decoupled from the host machine. In this way, the host machine cannot access the first random access memory area that is decoupled from the host machine. In addition, in a process in which the host machine upgrades the to-be-upgraded software, data in the first random access memory area is not cleared. This ensures that the virtual machine can use the data in the first random access memory area.

As shown in FIG. 3, the VPMEM allocator includes a memory reservation module, a memory management module, and a memory storage and restoration module.

The memory reservation module is configured to: partition the first random access memory area from the random access memory on the host machine, and decouple the first random access memory area from the host machine. In this way, in the process in which the host machine upgrades the to-be-upgraded software, the data in the first random access memory area that is decoupled from the host machine is not cleared, and the host machine cannot use the first random access memory area. In this case, in the process in which the host machine upgrades the to-be-upgraded software, the virtual machine can use the first random access memory area. This ensures that the virtual machine continues to execute a task item during the upgrade of the host machine.

The memory management module is configured to provide a first random access memory area interface, so that the virtual machine can invoke the first random access memory area interface to use the first random access memory area. That is, an operation on the first random access memory area needs to be handled by the memory management module. For example, when a virtual machine 1 needs to use the first random access memory area when executing a task item 1, the virtual machine 1 may use the first random access memory area through the first random access memory area interface provided by the memory management module. For another example, when the virtual machine 1 needs to use the first random access memory area to invoke a hardware resource when executing the task item 1, the virtual machine 1 may use the first random access memory area through the first random access memory area interface provided by the memory management module. That is, when the virtual machine needs to access the first random access memory area, for example, when using the data in the first random access memory area, the virtual machine can use the data in the first random access memory area through only the memory management module.

The memory storage and restoration module is configured to provide a storage interface, so that the virtual machine can invoke the storage interface to store, in the first random access memory area, data generated when the virtual machine executes the task item. That is, when the virtual machine saves data, the data can be saved in the first random access memory area through only the memory storage and restoration module.

After the host machine is upgraded, for example, after a new kernel is installed on the host machine, key information of the new kernel may be saved in the first random access memory area through the memory storage and restoration module.

After the host machine is upgraded, for example, after the new kernel is installed on the host machine, the new kernel needs to inherit the VPMEM allocator, and the new kernel parses memory information in the first random access memory area. After the new kernel runs, a process corresponding to the new kernel takes over the memory information in the first random access memory area, thereby implementing restoration of the memory information in the first random access memory area on the new kernel.

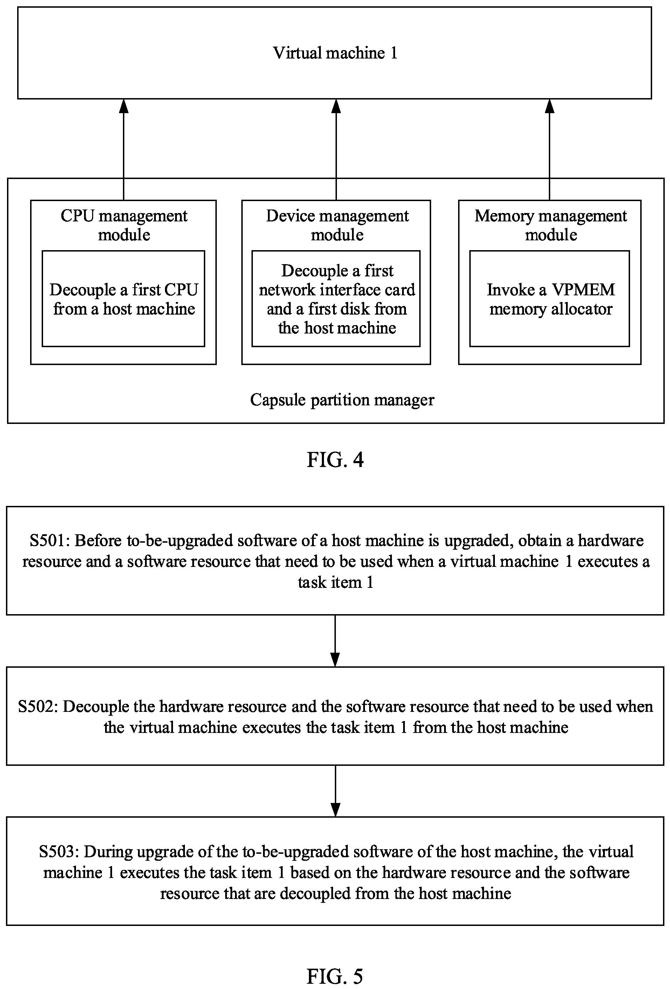

FIG. 4 is a diagram of allocating, by a Capsule partition manager, a hardware resource and a software resource to a virtual machine on a host machine.

Before the host machine starts to upgrade to-be-upgraded software of the host machine, the Capsule partition manager obtains a hardware resource that needs to be used by the virtual machine to execute a task item. The hardware resource includes but is not limited to a CPU, a network interface card, a hard disk, and the like. The Capsule partition manager decouples the hardware resource that needs to be used by the virtual machine on the host machine from the host machine, and a hardware resource that is not used by the virtual machine is not decoupled from the host machine, so that the hardware resource that is not decoupled from the host machine can be used when the host machine is upgraded, to complete the upgrade of the host machine. For example, a virtual machine 1 is installed on the host machine, and the virtual machine 1 needs to use a first CPU, a first network interface card, and a first hard disk. In this case, the first CPU, the first network interface card, and the first hard disk may be decoupled from the host machine, so that the virtual machine can use, during the upgrade, the first CPU, the first network interface card, and the first hard disk that are decoupled from the host machine. A second CPU, a second network interface card, and a second hard disk are still coupled to the host machine, so that the host machine can use, during the upgrade, the second CPU, the second network interface card, and the second hard disk that are coupled to the host machine.

As shown in FIG. 4, the Capsule partition manager includes a CPU management module, a device management module, and a memory management module.

The CPU management module is configured to decouple the first CPU from the host machine, so that the first CPU that is decoupled from the host machine is not powered off in a process in which the host machine upgrades the to-be-upgraded software, and the first CPU that is decoupled from the host machine is not restarted when the host machine is restarted. In this way, a task item executed by the virtual machine 1 is not affected.

After the virtual machine runs on the host machine, the host machine has an operating system. The host machine simulates an operating system for the virtual machine to use. Before the first CPU is decoupled from the host machine, when processing an interrupt message of the virtual machine 1, the first CPU is trapped into a kernel of the host machine to process the interrupt message. During the upgrade of the host machine, the first CPU cannot be trapped into the kernel of the host machine to process the interrupt message. Optionally, after the first CPU is decoupled from the host machine, the first CPU that is decoupled from the host machine may be directly assigned to the virtual machine 1 via LAPIC passthrough. In this way, when the first CPU that is decoupled from the host machine processes the interrupt message, the first CPU that is decoupled from the host machine does not need to be trapped into a kernel mode of the host machine to process the interrupt message, and the first CPU may process the interrupt message in a kernel mode of the virtual machine. This ensures consistency between performance of a partition and performance of the host machine, and implements that the first CPU that is decoupled from the host machine can also process the interrupt message in the process in which the host machine upgrades the to-be-upgraded software.

The device management module is configured to decouple the first network interface card and the first hard disk from the host machine, so that the first network interface card and the first hard disk that are decoupled from the host machine are not powered off in the process in which the host machine upgrades the to-be-upgraded software, and the first network interface card and the first hard disk that are decoupled from the host machine are not restarted when the host machine is restarted. In this way, the task item executed by the virtual machine 1 is not affected.

Optionally, after the first network interface card and the first hard disk are decoupled from the host machine, the first network interface card and the first hard disk that are decoupled from the host machine may be directly assigned to the virtual machine 1 via an IOMMU. In this way, after the first network interface card and the first hard disk that are decoupled from the host machine generate an interrupt message, the first network interface card and the first hard disk that are decoupled from the host machine do not need to transfer the interrupt message to the kernel of the host machine for processing, and the first network interface card and the first hard disk that are decoupled from the host machine may directly send the interrupt message to a kernel of the virtual machine for processing via the IOMMU. This ensures consistency between performance of a partition and performance of the host machine, and implements that the first network interface card and the first hard disk that are decoupled from the host machine may directly transfer the interrupt message to the virtual machine 1 in the process in which the host machine upgrades the to-be-upgraded software, so that the virtual machine 1 processes, in a user mode, an interrupt generated by the first network interface card and the first hard disk.

The memory management module is configured to invoke a VPMEM allocator, so that the virtual machine 1 can use a first random access memory area. In this way, during the upgrade of the host machine, the virtual machine 1 may not suspend the task item 1 that is being executed.

FIG. 5 is a schematic flowchart of a software upgrade method according to an embodiment of this application.

S501: Before to-be-upgraded software of a host machine is upgraded, obtain a hardware resource and a software resource that need to be used when a virtual machine 1 executes a task item 1.

For example, the software resource includes but is not limited to a random access memory.

The hardware resource includes but is not limited to a first CPU, a first network interface card, a first disk, and the like.

S502: Decouple the hardware resource and the software resource that need to be used when the virtual machine executes the task item 1 from the host machine.

Optionally, in some embodiments, the random access memory is used when the host machine upgrades the to-be-upgraded software. Therefore, a part, for example, a first random access memory area, needs to be partitioned from the random access memory on the host machine as a random access memory of the virtual machine 1. The remaining another part of the random access memory area is used as a random access memory of the host machine for upgrading the to-be-upgraded software.

Therefore, decoupling the software resource that needs to be used when the virtual machine executes the task item 1 from the host machine means decoupling the first random access memory area from the host machine. After the first random access memory area is decoupled from the host machine, when the host machine upgrades the to-be-upgraded software, data in the first random access memory area is not cleared, but data in the another part that is of the random access memory area and that is coupled to the host machine is cleared.

Optionally, in some embodiments, when upgrading the to-be-upgraded software, the host machine uses a hardware resource, for example, a second CPU, a second network interface card, and a second disk. In this case, only the hardware resource that needs to be used when the virtual machine 1 executes the task item 1 needs to be decoupled from the host machine, and a hardware resource that is not used when the virtual machine 1 executes the task item 1 does not need to be decoupled from the host machine, so that the hardware resource that is coupled to the host machine can be used when the host machine upgrades the to-be-upgraded software.

Therefore, decoupling the hardware resource that needs to be used when the virtual machine executes the task item 1 from the host machine means decoupling the first CPU, the first network interface card, and the first disk from the host machine. After the first CPU, the first network interface card, and the first disk are decoupled from the host machine, when the host machine upgrades the to-be-upgraded software, the first CPU, the first network interface card, and the first disk are not powered off, and the first CPU, the first network interface card, and the first disk are not initialized, so that the virtual machine can continue to invoke the hardware resource that is decoupled from the host machine, to execute the task item 1.

S503: During upgrade of the to-be-upgraded software of the host machine, the virtual machine 1 executes the task item 1 based on the hardware resource and the software resource that are decoupled from the host machine.

During the upgrade of the to-be-upgraded software of the host machine, the virtual machine 1 executes the task item 1 based on the hardware resource and the software resource that are decoupled from the host machine. This means that the virtual machine 1 executes the task item 1 based on the first CPU, the first network interface card, the first disk, and the first random access memory area that are decoupled from the host machine. During the upgrade of the to-be-upgraded software of the host machine, the virtual machine 1 does not suspend execution of the task item 1, to ensure that the task item is not interrupted.

Upgrading the to-be-upgraded software of the host machine may include the following steps.

Step 1: Obtain a new operating system.

Before the to-be-upgraded software of the host machine is upgraded, the host machine needs to obtain the new operating system (or referred to as a new kernel). Optionally, when the to-be-upgraded software of the host machine is upgraded, in some embodiments, a user-mode process also needs to be upgraded. Therefore, the host machine further needs to obtain the user-mode process (for example, an Initrd image).

After the new operating system and the user-mode process are obtained, the to-be-upgraded software of the host machine may start to be upgraded. That is, an old operating system is replaced with the new operating system.

Step 2: Replace the old operating system with the new operating system.

Optionally, the new operating system may be loaded by using a kexec method.

When the host machine loads the new operating system, a hardware resource and a software resource that are coupled to the host machine are stopped and restarted. A hardware resource and a software resource that are decoupled from the host machine are not stopped or restarted.

The host machine manages all hardware resources and software resources on the host machine, and obtains the hardware resource and the software resource that are coupled to the host machine. The host machine does not obtain the hardware resource and the software resource that are decoupled from the host machine. Therefore, the hardware resource and the software resource that are decoupled from the host machine are not stopped or restarted.

It may be learned from the description in S502 that the hardware resource that is coupled to the host machine may include the second CPU, the second network interface card, and the second disk, and the software resource that is coupled to the host machine may include the another part of the random access memory area. Therefore, during the upgrade of the host machine, the second CPU, the second network interface card, and the second disk are stopped and restarted, data in the another part of the random access memory area is also cleared, and the another part of the random access memory area cannot be used.

It may be learned from the description in S502 that the hardware resource that is decoupled from the host machine may include the first CPU, the first network interface card, and the first disk, and the software resource that is decoupled from the host machine may include the first random access memory area. Therefore, during the upgrade of the host machine, the first CPU, the first network interface card, and the first disk are not stopped or restarted, data in the first random access memory area is not cleared, and the virtual machine 1 can normally use the first CPU, the first network interface card, the first disk, and the first random access memory area.

Step 3: Initialize the hardware resource on the host machine.

After the new operating system is completely loaded, the hardware resource on the host machine needs to be initialized. That is, the hardware resource that is coupled to the host machine needs to be initialized. For example, the second CPU, the second network interface card, and the second disk that are coupled to the host machine need to be initialized.

Optionally, after the new operating system is completely loaded, if a VPMEM allocator is previously deployed in the old operating system, the new operating system can directly take over the VPMEM allocator, that is, inherit the data in the first random access memory area. In addition, the host machine loaded with the new operating system cannot use the first random access memory area, and cannot access the data in the first random access memory area either.

If a VPMEM allocator is not previously deployed in the old operating system but is deployed in the new operating system, the VPMEM allocator needs to be initialized in the new operating system. For details, refer to the descriptions in the embodiment in FIG. 3. Details are not described herein again in this embodiment of this application.

After the new operating system is completely loaded, the new operating system needs to start up the user-mode process and take over a virtual machine that is started up by a Capsule partition manager on the host machine. For example, a virtual machine 1 that is started up by the Capsule partition manager on the host machine is taken over.

After the new operating system is completely loaded, the new operating system takes over the Capsule partition manager. For example, the first CPU, the first network interface card, and the first disk that are in the Capsule partition manager and that are decoupled from the host machine are taken over. In addition, the host machine loaded with the new operating system cannot use the first CPU, the first network interface card, and the first disk.

After the new operating system takes over the Capsule partition manager, the Capsule partition manager needs to be upgraded. Specifically, the new operating system creates a new Capsule partition manager in the kernel, inherits a data segment in the old Capsule partition manager based on the new Capsule partition manager, and points an entry of the new Capsule partition manager to a new partition.

Based on the foregoing steps, the to-be-upgraded software of the host machine is completely upgraded. In this embodiment of this application, during the upgrade of the host machine, a task item executed by a virtual machine may run normally without interruption. This improves performance of the virtual machine.

In some embodiments, after the host machine is completely upgraded, the hardware resource and the software resource that are previously decoupled from the host machine may be coupled to the host machine again, allowing the host machine to reuse the hardware resource and the software resource that are decoupled from the host machine. That is, after the host machine is completely upgraded, the first CPU, the first network interface card, the first disk, and the first random access memory area that are previously decoupled from the host machine may be coupled to the host machine again, allowing the host machine to reuse the first CPU, the first network interface card, the first disk, and the first random access memory area.

In some embodiments, after the host machine is completely upgraded, the hardware resource and the software resource that are previously decoupled from the host machine may not be coupled to the host machine again, allowing the hardware resource and the software resource that are decoupled from the host machine to continue to be decoupled from the host machine. In this way, when the to-be-upgraded software of the host machine is upgraded next time, the operation of decoupling the hardware resource and the software resource that need to be used by the virtual machine from the host machine does not need to be repeatedly performed. This helps improve an upgrade speed of the host machine.

The following describes, with reference to a scenario of a DPU, a software upgrade method provided in an embodiment of this application.

The DPU is a newly developed dedicated processor. The DPU can process a service that is inefficiently processed by a CPU or a GPU. The service processed by the DPU can be divided into two parts: a frontend and a backend. The frontend and the backend have different operating systems.

In this case, both the frontend operating system and the backend operating system experience upgrade of software.

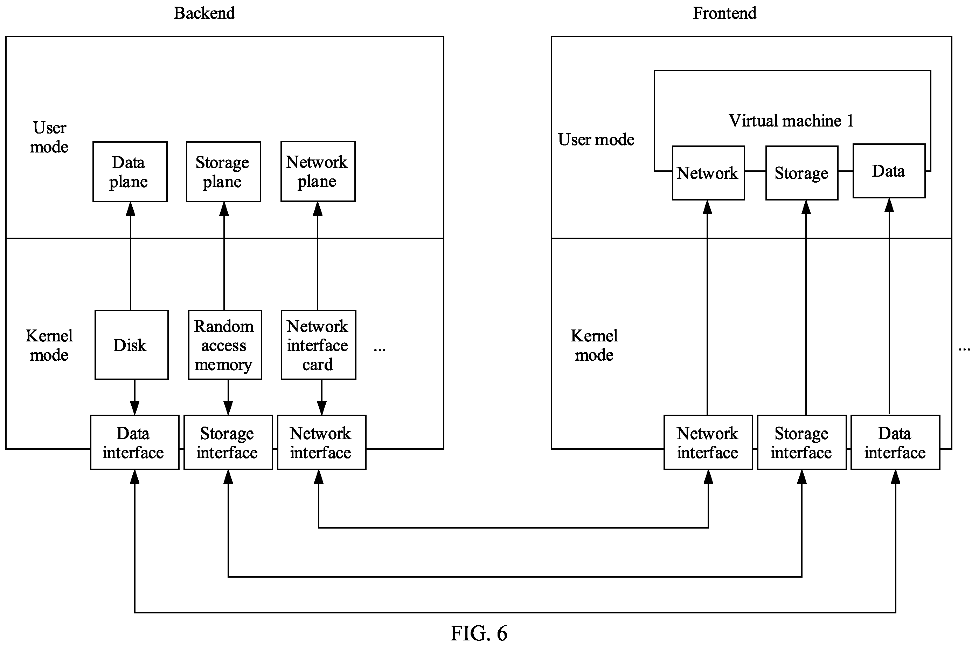

As shown in FIG. 6, the backend mainly provides a data service, a network service, and a storage service for the frontend. The frontend uses the data service, the network service, and the storage service of the backend. The DPU can simulate a data interface to provide the data service for the frontend. The DPU can simulate a network interface to provide the network service for the frontend. The DPU can provide a storage interface to provide the data service for the frontend. A virtual machine running at the frontend can use the data service, the network service, and the storage service that are provided by the backend to execute different task items. If software of the backend is upgraded, the backend cannot provide the data service, the network service, and the storage service for the frontend. If software of the frontend is upgraded, a network interface, a data interface, and a storage interface of the frontend suspend working. In this case, the virtual machine at the frontend cannot execute a task item.

Based on this, the backend uses a disk to run a data plane, uses a random access memory to run a storage plane, and uses a network interface card to run a network plane. Before the software of the backend is upgraded, a VPMEM allocator may be used to decouple the random access memory that needs to be used by the storage plane from a host machine. In addition, a Capsule partition manager is used to decouple the disk and the network interface card that need to be used by the network plane from the host machine. In this way, when the software of the backend is upgraded, the data plane, the storage plane, and the network plane of the backend can still work normally without interruption. In this case, the network interface, the data interface, and the storage interface of the backend continue to work. This ensures that the data service, the network service, and the storage service continue to be provided for the frontend, and also ensures that a task item executed by a virtual machine 1 at the frontend is not interrupted.

In some embodiments, before the software of the frontend is upgraded, the virtual machine 1 may be started up by using the VPMEM allocator and the Capsule partition manager, and the network interface, the data interface, and the storage interface of the frontend are decoupled from the host machine. In this way, when the software of the frontend is upgraded, the backend may still provide the data service, the network service, and the storage service to the virtual machine at the frontend through the network interface, the data interface, and the storage interface, thereby ensuring that the task item executed by the virtual machine 1 at the frontend is not interrupted.

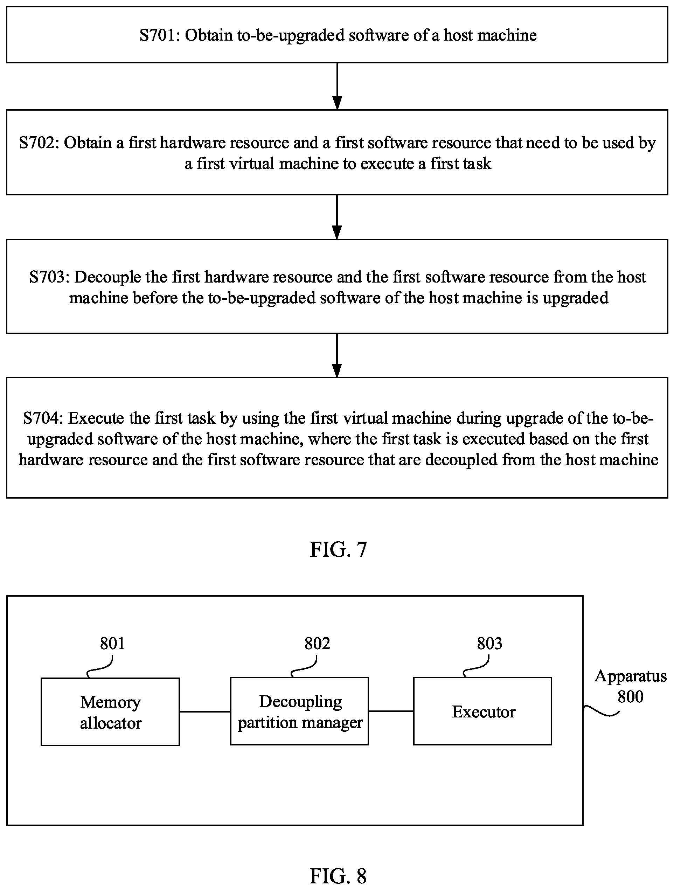

FIG. 7 is a schematic flowchart of a software upgrade method according to an embodiment of this application.

S701: Obtain to-be-upgraded software of a host machine.

In a possible implementation, the to-be-upgraded software includes an operating system or one or more functional components in an operating system.

S702: Obtain a first hardware resource and a first software resource that need to be used by a first virtual machine to execute a first task.

In a possible implementation, a memory of the host machine includes a first memory area and a second memory area, and the first software resource is the first memory area.

The first memory area may also be referred to as a first random access memory area. The second memory area may also be referred to as a second random access memory area. A random access memory may be an area in which data is temporarily stored on the first virtual machine. After the host machine is shut down and restarted, data stored in a random access memory on the host machine is cleared.

In this way, only the part that is of the memory and that is used by the virtual machine needs to be decoupled from the host machine. The second memory area maintains a coupling relationship with the host machine, to ensure normal execution of upgrading software of the host machine.

The first hardware resource includes one or more of the following: a first CPU, a first GPU, a first DPU, a first network interface card, and a first disk.

S703: Decouple the first hardware resource and the first software resource from the host machine before the to-be-upgraded software of the host machine is upgraded.

In a possible implementation, decoupling the first hardware resource and the first software resource from the host machine specifically includes: removing a dependency relationship between the first hardware resource and the host machine and a dependency relationship between the first software resource and the host machine, so that the host machine cannot use the first hardware resource and the first software resource. In this way, when the host machine upgrades the to-be-upgraded software, the operating system of the host machine is shut down, restarted, and initialized, but the hardware resource and the software resource that are decoupled from the host machine are not stopped, restarted, or initialized.

S704: Execute the first task by using the first virtual machine during upgrade of the to-be-upgraded software of the host machine, where the first task is executed based on the first hardware resource and the first software resource that are decoupled from the host machine.

In a possible implementation, the method includes: upgrading the to-be-upgraded software by using a second software resource and a second hardware resource that are coupled to the host machine, where the second software resource is the second memory area, and the second hardware resource includes one or more of the following: a second CPU, a second GPU, a second DPU, a second network interface card, and a second disk.

After a virtual machine is installed on the host machine, the host machine allocates a hardware resource and a software resource to the virtual machine. In this case, before an operating system is upgraded, the host machine obtains the hardware resource and the software resource that are allocated to the virtual machine. Therefore, when the host machine upgrades the to-be-upgraded software, the host machine may decouple the hardware resource and the software resource that need to be used by the virtual machine from the host machine.

Decoupling means that a dependency relationship is removed, allowing the host machine to consider that the hardware resource and the software resource that are decoupled from the host machine are in a power-off state. In this case, when the host machine is restarted, the hardware resource and the software resource that are decoupled from the host machine are not restarted.

In a possible implementation, the method further includes: after the to-be-upgraded software of the host machine is completely upgraded, continuing to decouple the first hardware resource and the first software resource from the host machine. In this way, when the to-be-upgraded software of the host machine is upgraded next time, the operation of decoupling the first hardware resource and the first software resource from the host machine does not need to be performed again. This may improve efficiency of upgrading the host machine.

According to the method, during upgrade of software of the host machine, a task item that is being executed by the virtual machine on the host machine is not suspended. This significantly improves performance of the host machine, and also speeds up execution of the task item by the virtual machine.

FIG. 8 is a diagram of a software upgrade apparatus according to an embodiment of this application.

As shown in FIG. 8, the apparatus 800 includes a memory allocator 801, a decoupling partition manager 802, and an executor 803.

In some embodiments, the memory allocator may also be referred to as a VPMEM allocator. The decoupling partition manager may also be referred to as a Capsule partition manager.

The executor 803 is configured to obtain to-be-upgraded software of a host machine. The memory allocator 801 is configured to obtain a first software resource that needs to be used by a first virtual machine to execute a first task. The decoupling partition manager 802 is configured to obtain a first hardware resource that needs to be used by the first virtual machine to execute the first task. The memory allocator 801 is further configured to decouple the first software resource from the host machine before the to-be-upgraded software of the host machine is upgraded. The decoupling partition manager 802 is further configured to decouple the first hardware resource from the host machine before the to-be-upgraded software of the host machine is upgraded. The executor 803 is configured to execute the first task by using the first virtual machine during upgrade of the to-be-upgraded software of the host machine, where the first task is executed based on the first hardware resource and the first software resource that are decoupled from the host machine.

In a possible implementation, the memory allocator 801 is specifically configured to remove a dependency relationship between the first software resource and the host machine, so that the host machine cannot use the first software resource; and the decoupling partition manager 802 is specifically configured to remove a dependency relationship between the first hardware resource and the host machine, so that the host machine cannot use the first hardware resource.

In a possible implementation, a memory of the host machine includes a first memory area and a second memory area, and the first software resource is the first memory area.

In a possible implementation, the first hardware resource includes one or more of the following: a first CPU, a first GPU, a first DPU, a first network interface card, and a first disk.

In a possible implementation, the memory allocator 801 is further configured to: after the to-be-upgraded software of the host machine is completely upgraded, continue to decouple the first software resource from the host machine; and the decoupling partition manager 802 is further configured to: after the to-be-upgraded software of the host machine is completely upgraded, continue to decouple the first hardware resource from the host machine.

In a possible implementation, the to-be-upgraded software includes an operating system or one or more components in an operating system.

In a possible implementation, the executor 803 is specifically configured to upgrade the to-be-upgraded software by using a second software resource and a second hardware resource that are coupled to the host machine, where the second software resource is the second memory area, and the second hardware resource includes one or more of the following: a second CPU, a second GPU, a second DPU, a second network interface card, and a second disk.

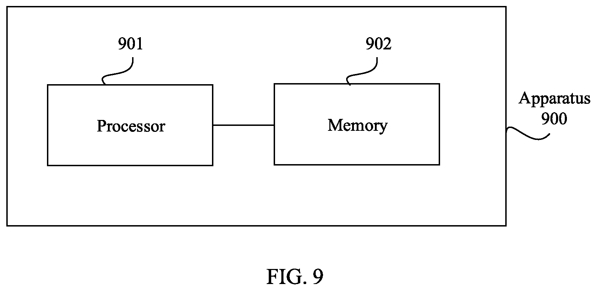

FIG. 9 is a diagram of another software upgrade apparatus according to an embodiment of this application.

As shown in FIG. 9, the apparatus 900 includes a processor 901 and a memory 902. The memory 902 is coupled to the processor 901. The memory 902 is configured to store computer program code, and the computer program code includes computer instructions. The processor 901 invokes the computer instructions, so that a host machine performs the software upgrade method according to the embodiment in FIG. 7.

This application provides a computer-readable storage medium, configured to store computer instructions. When the computer instructions are run on a computer, the computer is enabled to perform the software upgrade method according to the embodiment in FIG. 7.

This application provides a computer program product. When the computer program product is run on a computer, the computer is enabled to perform the software upgrade method according to the embodiment in FIG. 7.

The implementations of this application may be randomly combined, to achieve different technical effects.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on a computer, all or some of the procedure or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in the foregoing embodiments may be implemented by a computer program instructing relevant hardware. The program may be stored in a computer-readable storage medium. When the program is executed, the procedures in the foregoing method embodiments may be included. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A software upgrade method, wherein the method is applied to a host machine, and a first virtual machine is installed on the host machine; and the method comprises:
obtaining to-be-upgraded software of the host machine;
obtaining a first hardware resource and a first software resource that need to be used by the first virtual machine to execute a first task;
decoupling the first hardware resource and the first software resource from the host machine before the to-be-upgraded software of the host machine is upgraded; and
executing the first task by using the first virtual machine during upgrade of the to-be-upgraded software of the host machine, wherein the first task is executed based on the first hardware resource and the first software resource that are decoupled from the host machine.

2. The method according to claim 1, wherein decoupling the first hardware resource and the first software resource from the host machine specifically comprises:
removing a dependency relationship between the first hardware resource and the host machine and a dependency relationship between the first software resource and the host machine, so that the host machine is incapable of using the first hardware resource and the first software resource.

3. The method according to claim 1 or 2, wherein a memory of the host machine comprises a first memory area and a second memory area, and the first software resource is the first memory area.

4. The method according to any one of claims 1 to 3, wherein the first hardware resource comprises one or more of the following: a first CPU, a first GPU, a first DPU, a first network interface card, and a first disk.

5. The method according to any one of claims 1 to 4, wherein the method further comprises:
after the to-be-upgraded software of the host machine is completely upgraded, continuing to decouple the first hardware resource and the first software resource from the host machine.

6. The method according to any one of claims 1 to 5, wherein the to-be-upgraded software comprises an operating system or one or more functional components in an operating system.

7. The method according to claim 3, wherein the method comprises:
upgrading the to-be-upgraded software by using a second software resource and a second hardware resource that are coupled to the host machine, wherein
the second software resource is the second memory area; and
the second hardware resource comprises one or more of the following: a second CPU, a second GPU, a second DPU, a second network interface card, and a second disk.

8. A software upgrade apparatus, wherein the apparatus comprises a memory allocator, a decoupling partition manager, and an executor, wherein
the executor is configured to obtain to-be-upgraded software of the host machine;
the memory allocator is configured to obtain a first software resource that needs to be used by the first virtual machine to execute a first task; and
the decoupling partition manager is configured to obtain a first hardware resource that needs to be used by the first virtual machine to execute the first task, wherein
the memory allocator is further configured to decouple the first software resource from the host machine before the to-be-upgraded software of the host machine is upgraded;
the decoupling partition manager is further configured to decouple the first hardware resource from the host machine before the to-be-upgraded software of the host machine is upgraded; and
the executor is configured to execute the first task by using the first virtual machine during upgrade of the to-be-upgraded software of the host machine, wherein the first task is executed based on the first hardware resource and the first software resource that are decoupled from the host machine.

9. The apparatus according to claim 8, wherein the memory allocator is specifically configured to remove a dependency relationship between the first software resource and the host machine, so that the host machine is incapable of using the first software resource; and
the decoupling partition manager is specifically configured to remove a dependency relationship between the first hardware resource and the host machine, so that the host machine is incapable of using the first hardware resource.

10. The apparatus according to claim 8 or 9, wherein a memory of the host machine comprises a first memory area and a second memory area, and the first software resource is the first memory area.

11. The apparatus according to any one of claims 8 to 10, wherein the first hardware resource comprises one or more of the following: a first CPU, a first GPU, a first DPU, a first network interface card, and a first disk.

12. The apparatus according to any one of claims 8 to 11, wherein the memory allocator is further configured to: after the to-be-upgraded software of the host machine is completely upgraded, continue to decouple the first software resource from the host machine; and
the decoupling partition manager is further configured to: after the to-be-upgraded software of the host machine is completely upgraded, continue to decouple the first hardware resource from the host machine.

13. The apparatus according to any one of claims 8 to 12, wherein the to-be-upgraded software comprises an operating system or one or more components in an operating system.

14. The method according to claim 10, wherein the executor is configured to upgrade the to-be-upgraded software by using a second software resource and a second hardware resource that are coupled to the host machine, wherein
the second software resource is the second memory area; and
the second hardware resource comprises one or more of the following: a second CPU, a second GPU, a second DPU, a second network interface card, and a second disk.

15. A software upgrade apparatus, wherein the apparatus comprises a processor and a memory, the memory is coupled to the processor, the memory is configured to store computer program code, the computer program code comprises computer instructions, and the processor invokes the computer instructions, to enable the host machine to perform the method according to any one of claims 1 to 7.

16. A computer-readable storage medium, configured to store computer instructions, wherein when the computer instructions are run on a host machine, the host machine is enabled to perform the method according to any one of claims 1 to 7.

17. A computer program product, wherein when the computer program product is run on a host machine, the host machine is enabled to perform the method according to any one of claims 1 to 7.
